# EUROPEAN PATENT SPECIFICATION

(11) **EP 3 910 465 B1**
(45) Date of publication and mention of the grant of the patent: **12.07.2023**
(21) Application number: 20174404.2
(22) Date of filing: 13.05.2020
(51) Int. Cl.: G06F 3/12, G06F 3/0482

(54) **COMPUTER SYSTEM FOR MONITORING A PLURALITY OF PRINTING SYSTEMS**
RECHNERSYSTEM ZUR ÜBERWACHUNG MEHRERER DRUCKSYSTEME
SYSTÈME INFORMATIQUE POUR SURVEILLER UNE PLURALITÉ DE SYSTÈMES D'IMPRESSION

(43) Date of publication of application: 17.11.2021
(73) Proprietor: Canon Production Printing Holding B.V., 5914 HH Venlo (NL)
(72) Inventor: HERMUS, Bastiaan J., 5914 HH Venlo (NL); NAUTA, Gadze C., 5914 HH Venlo (NL)
(74) Representative: Canon Production Printing IP Department

(56) References cited:
- EP-A1- 0 943 987
- EP-A1- 3 588 261
- WO-A1-00/54137
- US-A1- 2020 058 067

## Description

### FIELD OF THE INVENTION

The present invention relates to a computer system for monitoring a plurality of printing systems, the computer system comprising a user interface having a display, the user interface being configured to display a first image frame and a second image frame on the user interface, wherein each image frame comprises a selection item for selecting a printing system from a plurality of printing systems, and is related to a different application which is executed when the printing system is selected by means of a corresponding selection item, and to receive a selection of a printing system in the first image frame by means of a corresponding selection item, wherein the computer system is configured, upon receipt of the selection, to execute a first application related to the first image frame, the first application having the printing system as digital input and first printer information of the printing system as digital output, and to transmit the first printer information of the printing system to the user interface.

The verbs "to execute" and "to invoke" will be interchangeably used for execution of an application ("app") according to the present invention. The verb "to activate" will be used for pressing, touching, or mouse clicking a user operable item on the user interface of the computer system according to the present invention.

The computer system according to the invention is meant to offer a high performance, especially with respect to CPU and graphics, memory capacity, and multitasking capability. The computer is optimized for the visualization and manipulation of different types of complex data such as image frames, dynamic user interfaces, list structures and visual status information, optimal screen refresh times, etc.

Typically, the form factor is that of a desktop computer, consist of a high resolution display, a keyboard and a mouse at a minimum, but also offer multiple displays, graphics tablets, touch screen(s) etc.

### BACKGROUND OF THE INVENTION

Image frames may for example comprise information on the current status of the printing system, the supply status of consumables such as media and marking material, and more or less detailed information on print jobs that have been processed and/or are waiting in a print queue for being processed. The user may switch between different image frames in order to retrieve the information she is presently interested in. The display items to be shown in the different image frames may change dynamically in accordance with changes in the status of the printing system selected in the application.

The display of a conventional user interface may for example be mounted on a body of the printing system as a local user interface or may be part of a computing device connected to the printing system via a wireless or wired digital network connection as a remote user interface. The user interface may have a relatively large display area suitable for displaying a larger number of image frames at a time, or may have a relatively small display area suitable for displaying a compact number of image frames at a time.

Today, a user interface for a printing system or any other equipment is frequently implemented as at least one application (App) on a smartphone or tablet computer which has a touch screen display with only a relatively small display area, so that the user is required to switch between different image frames more frequently.

According to EP3588261 A1 an information processing apparatus is described that launches print software in a case wherein print setting information set by a user includes a setting that matches a launch condition for the print software.

Nowadays printer applications also known as printer 'Apps' are developed for a dynamic user interface in order to display information about at least one printing system in a display of a user interface of a computer system in an image frame, which information is dynamically updated. A printer app may have a dropdown list, for example in the app header, for selecting an identifier of a printing system in order to specify the printing system for which an output of the app is needed. When the identifier is selected from the dropdown list, the output of the app is dedicated for the selected printing system.

However, when a user wants all image frames residing on the display to comprise information of one specific printing system, the user has to select the one specific printing system in each app separately.

It is an object of the invention to provide a computer system having a user interface as if it is just designed for multi-printer navigation, and as if it is designed for a single-printer navigation at the same time.

### SUMMARY OF THE INVENTION

In the computer system according to the invention, in order to achieve this object, the first image frame comprises a user operable linking item for linking the first image frame to the second image frame in such a way that when the user operable linking item is activated and upon receipt of the selection, the computer system is configured to execute a second application related to the second image frame, the second application having the printing system as digital input and second printer information of the printing system as digital output, and to transmit the second printer information of the printing system to the user interface, wherein the user interface is configured, upon receipt of the transmitted first printer information and the transmitted second printer information, to display on the display the first printer information near the first image frame and the second printer information near the second image frame, wherein each of the first printer information and the second printer information is a kind of information of at least one out of a print job queue of the printing system, a print job schedule of the printing system, a maintenance schedule of the printing system, status information of the printing system, amount of printing material residing in the printing system, amount of printing material needed for the print jobs in the print job queue of the printing system, amount of post-printing material needed for the print jobs in the print queue, a determined period of unattended printing of the printing system, content information of the print job which is currently being printed by the printing system, a consumable overview for the printing system, media management for the printing system, color management for the printing system, workflow management for the printing system, configuration management for the printing system, user management for the printing system and security management for the printing system, wherein the first printer information is of a different kind of information than the second printer information.

According to the present invention the user has a choice to link the first application to the second application or not. The choice of linking the applications is determined by activation of the user operable linking item on the display and the choice of non-linking is determined by non-activation of the user operable linking item on the display. By doing so, the choice between these two options is left to the user. When the first application is linked to the second application an execution of the first application will have an effect that the second application is also invoked to generate printer information with respect to the same selected printer as for the first application. When the first application is not linked to the second application, the second application will not be invoked when the first application is invoked.

The linking mechanism according to the invention is meant to be a two-way mechanism. Changing the printer for the second image frame will also change the selection for the first image frame, when the first and second image frames are linked. The link may also be created between more than two image frames. If the printer for the second (or third, fourth etc.) image frame is changed, this will have effect on the first image frame as well, when linked.

Printer information near an image frame according to the invention is meant to be printer information positioned on the display in the neighbourhood of the image frame. The position may be at the left side of, at the right side of, beneath or below of the image frame, or a combination of such positions.

According to an embodiment an application corresponding to an image frame is executed when a printer is selected by means of the selection item in the image frame.

According to an embodiment the user interface is a dynamic user interface. In a dynamic user interface, the first and second printer information displayed in the first and second image frame respectively may change dynamically in accordance with changes in the status of the printing system. In that case, the print controller stores the information to be displayed in the given image frame in the form of a function of an information-determining variable that reflects the status of the printing system. Then, if a printer attribute of the printing system is assigned to the image frame, the effect may be that the information shown in the image frame changes dynamically in accordance with the status of the printing system.

According to an embodiment the selection item is a dropdown list. A printer may be selected from the dropdown list.

According to an embodiment the user operable linking item is part of the selection item. The user operable linking item may be residing in a sub-section of the selection item.

According to an embodiment the user operable linking item is a toggling item for activating or de-activating the link between the first and second application, i.e. for linking or unlinking the first application and the second application. Such a toggling item is based on the idea of a single "Linked" item.

According to another embodiment the user operable linking item is a dropdown list comprising a plurality of linking names, each linking name corresponding to a group of linked image frames. This embodiment enables an extension to the idea of a single "Linked" item, since according to this embodiment there are multiple linking names named in the dropdown list from which one can be selected, e.g. "Linked1" and "Linked2". All image frames with linking name "Linked1", adhere to a selection change within one of those image frames, while the image frames marked with "Linked2" adhere to changes within their corresponding image frames. By doing so, for example, 2 sets of applications may be open, one set for a first printer and another set for a second printer, and the various apps of these printers can quickly be compared.

According to an embodiment the user interface is configured to display a plurality of image frames and each image of the plurality of image frames comprises a selection item for selecting a printing system from a plurality of printing systems and comprises a user operable linking item for linking the image frame to the other image frames of the plurality of image frames.

The present invention also relates to a method for monitoring a plurality of printing systems by means of a computer system comprising a user interface having a display, the method comprising the steps of displaying a first image frame and a second image frame on the user interface, wherein each image frame comprises a selection item for selecting a printing system from a plurality of printing systems, and is related to a different application which is executed when the printing system is selected by means of a corresponding selection item, receiving a selection of a printing system in the first image frame by means of a corresponding selection item, upon receipt of the selection, executing a first application related to the first image frame, the first application having the printing system as digital input and first printer information of the printing system as digital output, and transmitting the first printer information of the printing system to the user interface, wherein the first image frame comprises a user operable linking item for linking the first image frame to the second image frame in such a way that when the user operable linking item is activated and upon receipt of the selection, a second application related to the second image frame is executed, the second application having the printing system as digital input and second printer information of the printing system as digital output, and the second printer information of the printing system is transmitted to the user interface, and,
upon receipt of the transmitted first printer information and the transmitted second printer information, displaying on the display the first printer information near the first image frame and the second printer information near the second image frame, wherein each of the first printer information and the second printer information is a kind of information of at least one out of a print job queue of the printing system, a print job schedule of the printing system, a maintenance schedule of the printing system, status information of the printing system, amount of printing material residing in the printing system, amount of printing material needed for the print jobs in the print job queue of the printing system, amount of post-printing material needed for the print jobs in the print queue, a determined period of unattended printing of the printing system, content information of the print job which is currently being printed by the printing system, a consumable overview for the printing system, media management for the printing system, color management for the printing system, workflow management for the printing system, configuration management for the printing system, user management for the printing system and security management for the printing system, wherein the first printer information is of a different kind of information than the second printer information.

The present invention also relates to a non-transitory recording medium comprising computer executable program code which, when executed, enables a computer to perform the steps of the method according to the invention.

The present invention also relates to a printing system configured to be monitored by a computer system according to the invention.

### BRIEF DESCRIPTION OF THE DRAWINGS

Embodiment examples will now be described in conjunction with the drawings, wherein:
- FIG. 1: is a view of a computer system according to the invention;
- FIG. 2: shows the user interface displaying image frames according to the invention;
- FIGs. 3-5: show the printer selection items according to the invention and the user operable linking items according to the invention;
- FIGs. 6 - 8: illustrates the result of the execution of applications corresponding to the image frames according to the invention; and
- Fig. 9: is a flow diagram of a method according to the invention;

### DETAILED DESCRIPTION OF EMBODIMENTS

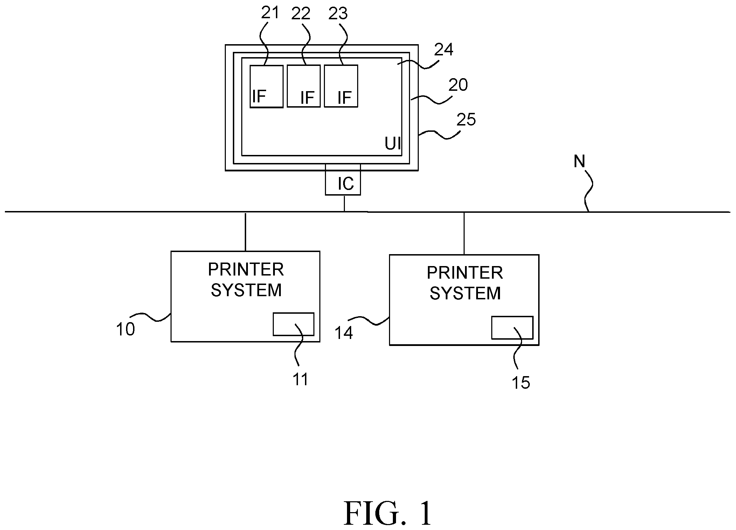

As is shown in FIG. 1, a user interface 20 has been implemented on a computer system 25 which has a display 24 that is constituted by a touch screen or mouse screen and displays at least one image frame 21, 22, 23. The user interface 20 also has an interface controller IC to - wirelessly or wired - couple the computer system 25 to a digital network N. To the digital network N also a plurality of printing systems 10, 14 is connected - wireless or wired.

It is assumed that the computer system 25 serves for controlling the plurality of printing systems 10, 14. Each image frame 21, 22, 23 includes a selection item according to the invention. The printing systems 10, 14 are controlled by a print controller 11, 15 respectively.

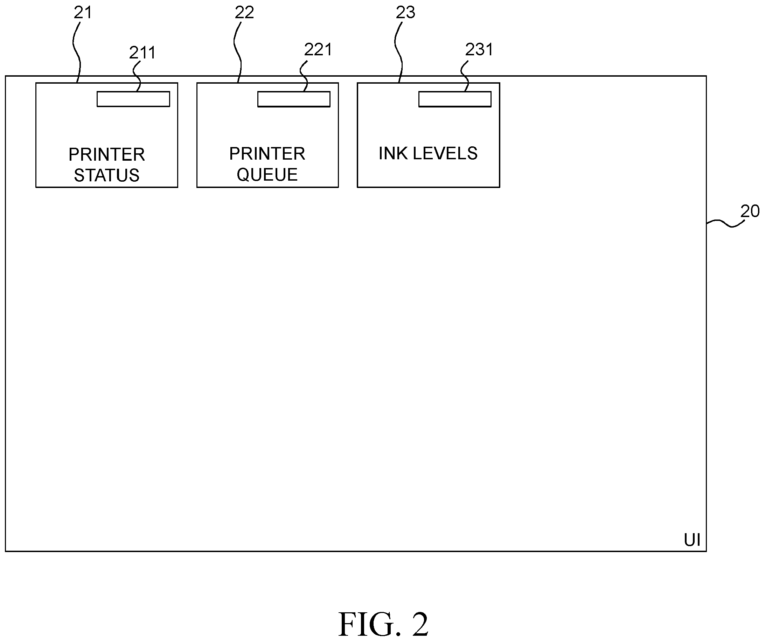

FIG. 2 illustrates three image frames 21, 22, 23 according to the invention on the user interface 20. The number of three image frames is arbitrarily chosen, but may also be any other number of image frames which is larger or equal to two.

A first image frame 21 is user operable for starting a first application which shows first printer information when executed, for example a printer status. A second image frame 22 is user operable for starting a second application which shows second printer information when executed, for example a printer queue of print jobs. A third image frame 23 is user operable for starting a third application which shows third printer information when executed, for example ink levels of a printer.

The user operable image frame 21, 22, 23 may be activated by a mouse click or by a touch on the image frame.

The first image frame 21 comprises a selection item 211 for selecting a printing system from the plurality of printing systems according to the invention.

The second image frame 22 comprises a selection item 221 for selecting a printing system from the plurality of printing systems according to the invention.

The first image frame 23 comprises a selection item 231 for selecting a printing system from the plurality of printing systems according to the invention.

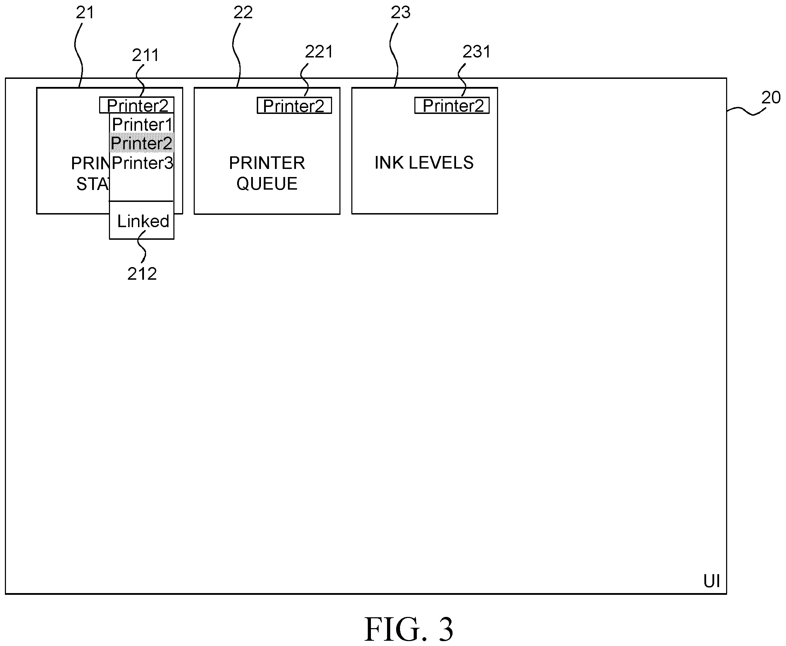

FIG. 3 - 5 show the selection items 211, 212, 213 in more detail.

In FIG. 3 the first selection item 211 is activated and shows a selection list of the plurality of printers named "Printer1", "Printer2", "Printer3". In this example three printers are listed, but any number of printers being larger than 1 may be listed. By selecting one of the printers, the printer information for the selected printer is displayed when invoking the image frame 21. For the first image frame, the printer information concerns the printer status of the selected printer. In FIG. 3 the printer named "Printer2" is selected.

The first selection item 211 also shows in a subsection of the first selection item 211 a first user operable linking item 212 according to the invention. The first user operable linking item 212 is used for linking the first image frame 21 to the second image frame 22 and/or to the third image frame 23 according to the invention. When the first user operable linking item 212 is activated, the first user operable linking item 212 is labeled with a link status "Linked". When the first user operable linking item 212 is de-activated, the first user operable linking item 212 is labeled with the link status "Not Linked". In FIG. 3 the first user operable linking item 212 is labeled with the link status "Linked".

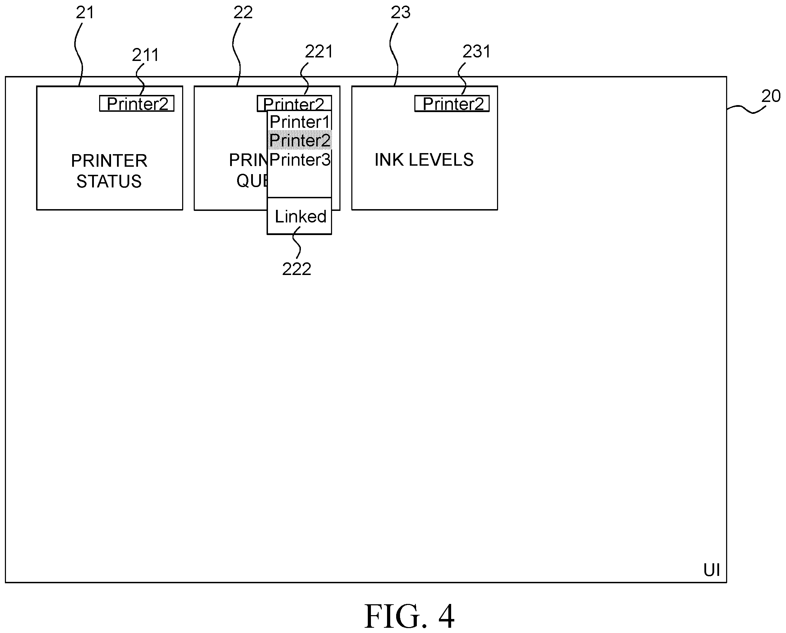

In FIG. 4 the second selection item 221 is activated and shows a selection list of the plurality of printers and a second user operable linking item 222 which is labeled with the link status "Linked".

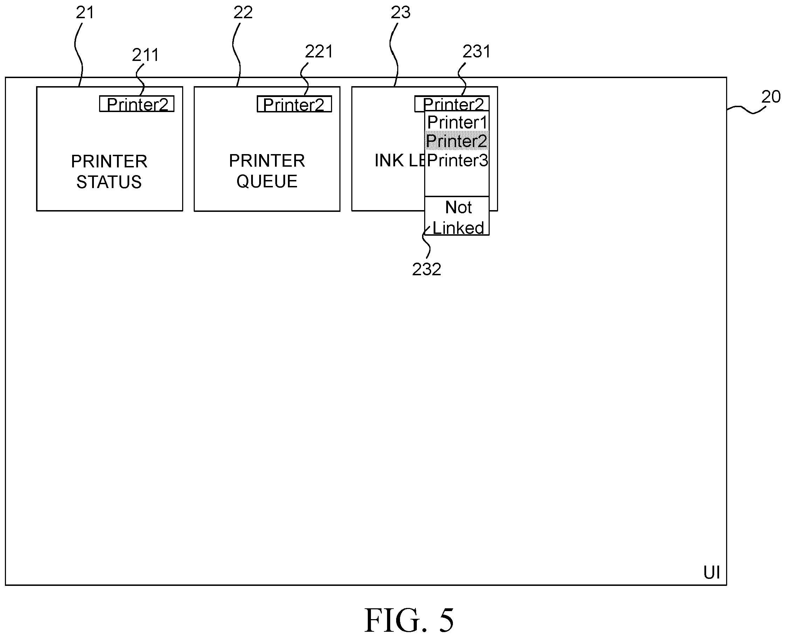

In FIG. 5 the third selection item 231 is activated and shows a selection list of the plurality of printers and a third user operable linking item 232 which is labeled with the link status "Unlinked".

In FIG. 2 - 5 for all image frames 21, 22, 23 the printer named "Printer2" is selected.

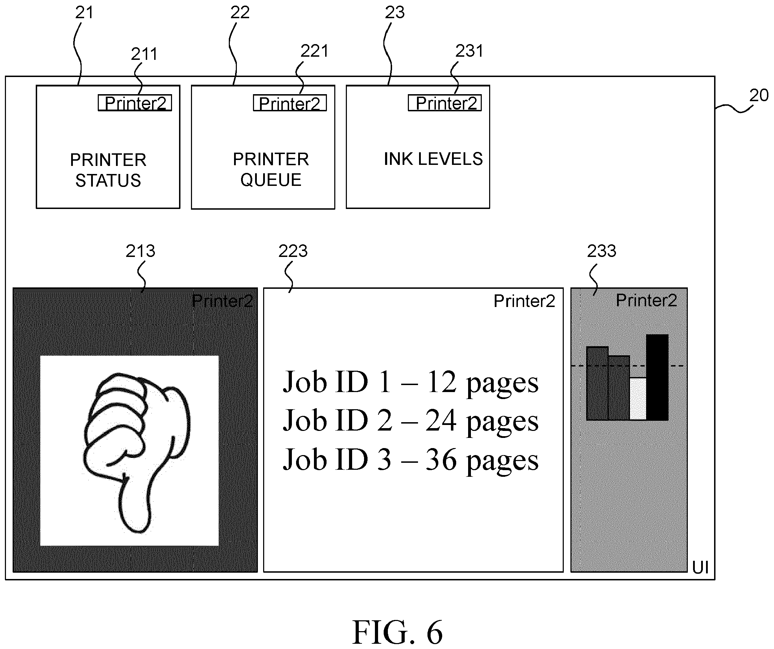

To illustrate the invention, in FIG. 6 the first image frame 21, the second image frame 22 and the third image frame 23 are activated. Upon activation of the image frames 21, 22, 23, the underlying applications are executed with the printer named "Printer2" as input. Upon activation of the first image frame 21 and execution of the corresponding application, the first printer information 213 is displayed which information is about the printer status of the selected printer named "Printer2". The printer status of "Printer2" is a status "Out of Order" which is red coloured with a thumb down image. Upon activation of the second image frame 22 and execution of the corresponding application, the second printer information 223 is displayed which information is about the printer queue of the selected printer named "Printer2". In the printer queue of "Printer2" three jobs identified with Job ID's 1, 2 and 3 are waiting for printing. Upon activation of the third image frame 21 and execution of the corresponding application, the third printer information 213 is displayed which information is about the ink levels of the selected printer named "Printer2".

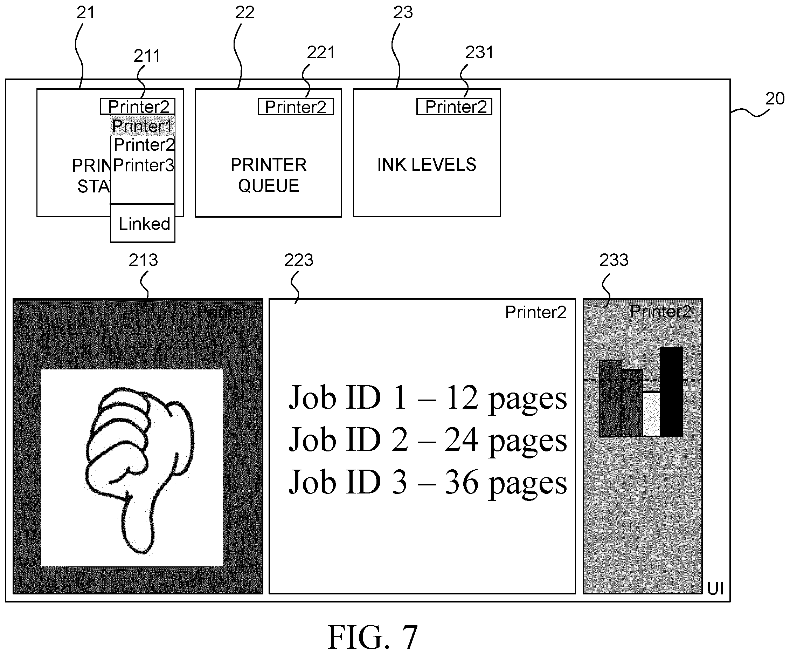

FIG. 7 shows the user interface 20 wherein the user wants to change the selected printer in the first image frame 21 from the printer named "Printer2" to the printer named "Printer1" by means of the first selection item 211.

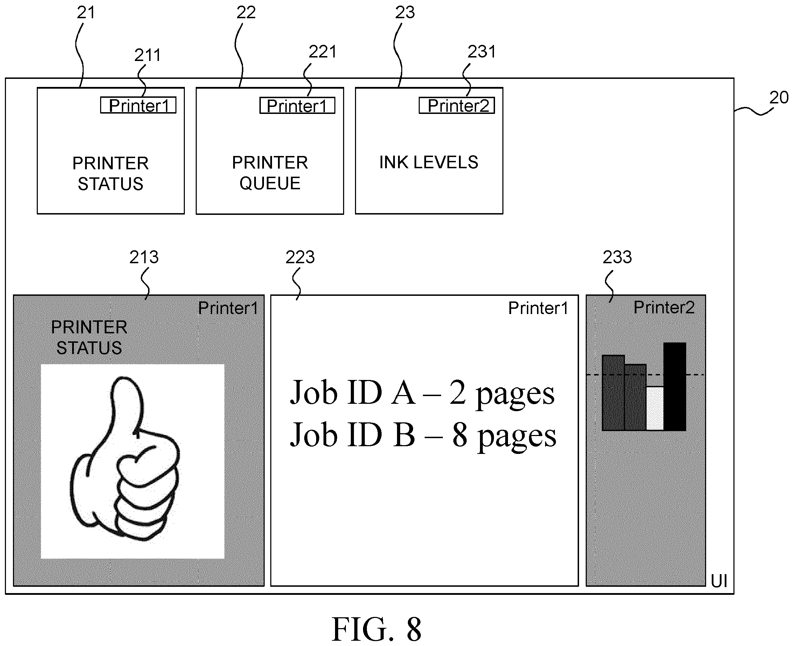

FIG. 8 shows the user interface 20 after the printer named "Printer1" is selected in the first selection item 211.

By selecting the printer named "Printer1" the underlying application is now executed with the printer named "Printer1" as input. The first printer information 213 is now displaying information about the printer status of the selected printer named "Printer1". The printer status of "Printer1" is a status "Printing" which is green coloured with a thumb up image.

By selecting the printer named "Printer1" the underlying application of the second image frame 22 is now executed with the printer named "Printer1" as input. The second printer information 223 is now displaying information about the printer queue of the selected printer named "Printer1". This is achieved since the second user operable linking item 222 in the second selection item 221 - shown in FIG. 4 - has been labeled with the link status "Linked". In the printer queue of "Printer1" two jobs identified with Job ID's A and B are waiting for printing. Thus the second printer information 223 is updated due to the change of the printer selection in the first image frame 21.

The third printer information 233 is still displaying information about the ink levels of the selected printer named "Printer2". This is achieved since the third user operable linking item 232 in the third selection item 231 - shown in FIG. 5 - has been labeled with the link status "Not Linked". Thus the application corresponding to the third image frame 23 is not executed. The third printer information 233 is not updated despite the change of the printer selection in the first image frame 21 and still shows the information related to the previously selected printer named "Printer2".

According to the embodiments described in FIG. 3-8 each user operable linking item 212, 222, 232 is a toggling item for activating or de-activating the link between the first and second application, i.e. for linking or unlinking the first application and the second application. Such a toggling item is based on the idea of a single "Linked" item.

According to another embodiment the user operable linking item is a dropdown list comprising a plurality of linking names of links. This embodiment enables an extension to the idea of a single "Linked" item, since according to this embodiment there are multiple Linked elements named in the dropdown list from which one can be selected, e.g. "Linked1" and "Linked2". All image frames with linking name "Linked1", adhere to a selection change within one of those image frames, while the image frames marked with "Linked2" adhere to changes within their corresponding image frames. By doing so, 2 sets of applications may be open, one set for a first printer and another set for a second printer, and the various apps of these printers can quickly be compared.

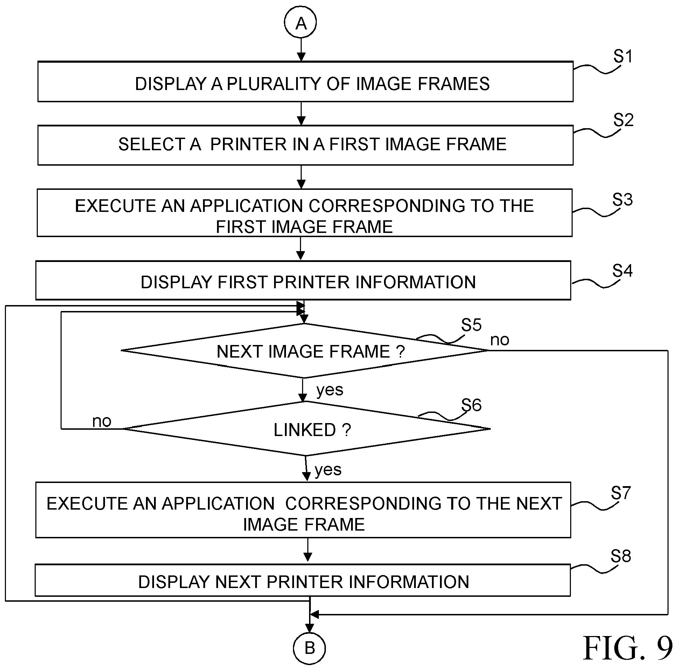

FIG. 9 is a flow diagram of the method according to the present invention.

The method starts in starting point A which leads to a first step S1.

In the first step S1 a plurality of image frames are displayed on the user interface of the computer system according to the invention.

In a second step S2 a printer is selected in a first image frame of the plurality.

In a third step S3 an application corresponding to the first image frame is executed having the selected printer as input and first printer information as output.

In a fourth step S4 the first printer information is transmitted to the user interface and displayed on the display of the user interface.

In a fifth step S5 the next image frames are iterated upon. For each next image frame it is checked in a sixth step S6 if the user operable linking item according to the present invention is set to "Linked". If so, the method proceeds to a seventh step S7. If not so, the method returns to the fifth step S5.

In the seventh step S7 an application corresponding to the next image frame is executed with the selected printer as input and dedicated next printer information as output.

In an eighth step S8 the dedicated next printer information of the selected printer is transmitted to the user interface and shown on the display of the user interface. After the eighth step S8 the method returns to the fifth step S5.

If all image frames are iterated upon, the method proceeds to an endpoint B.

## Claims

1. A computer system (25) for monitoring a plurality of printing systems, the computer system comprising a user interface (20) having a display (24), the user interface (20) being configured
to display a first image frame (21) and a second image frame (22) on the user interface (20), wherein each image frame (21,22) comprises a selection item (211, 221) for selecting a printing system (10, 14) from a plurality of printing systems, and is related to a different application which is executed when the printing system (10, 14) is selected by means of a corresponding selection item (211, 221), and
to receive a selection of a printing system (10, 14) in the first image frame (21) by means of a corresponding selection item (211),
wherein the computer system (25) is configured, upon receipt of the selection,
to execute a first application related to the first image frame (21), the first application having the printing system (10, 14) as digital input and first printer information (213) of the printing system (10, 14) as digital output, and to transmit the first printer information (213) of the printing system (10, 14) to the user interface (20),
wherein
the first image frame (21) comprises a user operable linking item (212) for linking the first image frame (21) to the second image frame (22) in such a way that when the user operable linking item (212) is activated and upon receipt of the selection, the computer system (25) is configured
to execute a second application related to the second image frame (21), the second application having the printing system (10, 14) as digital input and second printer information (223) of the printing system (10, 14) as digital output, and
to transmit the second printer information (223) of the printing system (10, 14) to the user interface (20), wherein the user interface (20) is configured, upon receipt of the transmitted first printer information (213) and the transmitted second printer information (223),
to display on the display (24) the first printer information (213) near the first image frame (21) and the second printer information (223) near the second image frame (22), wherein each of the first printer information and the second printer information is a kind of information of at least one out of a print job queue of the printing system, a print job schedule of the printing system, a maintenance schedule of the printing system, status information of the printing system, amount of printing material residing in the printing system, amount of printing material needed for the print jobs in the print job queue of the printing system, amount of post-printing material needed for the print jobs in the print queue, a determined period of unattended printing of the printing system, content information of the print job which is currently being printed by the printing system, a consumable overview for the printing system, media management for the printing system, color management for the printing system, workflow management for the printing system, configuration management for the printing system, user management for the printing system and security management for the printing system, and wherein the first printer information is of a different kind of information than the second printer information.

2. The computer system (25) according to claim 1, wherein the user interface (20) is a dynamic user interface.

3. The computer system (25) according to any of the preceding claims, wherein the selection item (211, 221) is a dropdown list.

4. The computer system (25) according to any of the preceding claims, wherein the user operable linking item (212, 222) is part of the selection item (211, 221).

5. The computer system (25) according to any of the preceding claims, wherein the user operable linking item (212, 222) is a dropdown list comprising a plurality of linking names, each linking name corresponding to a group of linked image frames.

6. The computer system (25) according to any of the preceding claims, wherein the user interface (20) is configured to display a plurality of image frames and each image from of the plurality of image frames comprises a selection item for selecting a printing system from a plurality of printing systems and comprises a user operable linking item for linking the image frame to the other image frames of the plurality of image frames.

7. A Method for monitoring a plurality of printing systems by means of a computer system (25) comprising a user interface (20) having a display (24), the method comprising the steps of
- displaying (S1) a first image frame (21) and a second image frame (22) on the user interface (20), wherein each image frame (21,22) comprises a selection item (211, 221) for selecting a printing system (10, 14) from a plurality of printing systems, and is related to a different application which is executed when the printing system (10, 14) is selected by means of a corresponding selection item (211, 221),
- receiving (S2) a selection of a printing system (10, 14) in the first image frame (21) by means of a corresponding selection item (211),
- upon receipt of the selection, executing (S3) a first application related to the first image frame (21), the first application having the printing system (10, 14) as digital input and first printer information (213) of the printing system (10, 14) as digital output, and transmitting (S4) the first printer information (213) of the printing system (10, 14) to the user interface (20),
wherein the first image frame (21) comprises a user operable linking item (212) for linking the first image frame (21) to the second image frame (22) in such a way that when the user operable linking item (212) is activated (S6) and upon receipt of the selection, and the method comprising the steps of
executing (S7) a second application related to the second image frame (21), the second application having the printing system (10, 14) as digital input and second printer information (223) of the printing system (10, 14) as digital output, and
transmitting (S8) the second printer information (223) of the printing system (10, 14) to the user interface (20), and,
upon receipt of the transmitted first printer information (213) and the transmitted second printer information (223),
displaying (S4, S8) on the display (24) the first printer information (213) near the first image frame (21) and the second printer information (223) near the second image frame (22), wherein each of the first printer information and the second printer information is a kind of information of at least one out of a print job queue of the printing system, a print job schedule of the printing system, a maintenance schedule of the printing system, status information of the printing system, amount of printing material residing in the printing system, amount of printing material needed for the print jobs in the print job queue of the printing system, amount of post-printing material needed for the print jobs in the print queue, a determined period of unattended printing of the printing system, content information of the print job which is currently being printed by the printing system, a consumable overview for the printing system, media management for the printing system, color management for the printing system, workflow management for the printing system, configuration management for the printing system, user management for the printing system and security management for the printing system, wherein the first printer information is of a different kind of information than the second printer information.

8. Non-transitory computer readable medium comprising computer executable program code which, when executed, enables a computer to perform the steps of the method according to claim 7.

9. A system comprising a computer system according to any of the claims 1 to 6, and a printing system configured to be monitored by the computer system.

## Patentansprüche

1. Ein Rechnersystem (25) zur Überwachung mehrerer Drucksysteme, wobei das Rechnersystem eine Benutzerschnittstelle (20) mit einem Display (24) aufweist und die Benutzerschnittstelle dazu konfiguriert ist:
einen ersten Bildframe (21) und einen zweiten Bildframe (22) auf der Benutzerschnittstelle (20) anzuzeigen, wobei jeder Bildframe (21, 22) ein Auswahlelement (211, 221) zum Auswählen eines Drucksystems (10, 14) aus einer Vielzahl von Drucksystemen aufweist und sich auf eine andere Anwendung bezieht, die ausgeführt wird, wenn das Drucksystem (10, 14) mit Hilfe eines entsprechenden Auswahlelements (211, 221) ausgewählt wird, und
eine Auswahl eines Drucksystems (10, 14) in dem ersten Bildframe (21) mit Hilfe eines entsprechenden Auswahlelements (211) zu empfangen,
wobei das Rechnersystem (25) dazu konfiguriert ist, bei Empfang der Auswahl eine erste Anwendung auszuführen, die sich auf den ersten Bildframe (21) bezieht, wobei die erste Anwendung das Drucksystem (10, 14) als digitalen Input und erste Druckerinformation (213) über das Drucksystem (10, 14) als digitalen Output hat, und die erste Druckerinformation (213) über das Drucksystem (10, 14) an die Benutzerschnittstelle (20) zu übermitteln,
wobei
der erste Bildframe (21) ein von einem Benutzer betätigbares Verknüpfungselement (212) zum Verknüpfen des ersten Bildframes (21) mit dem zweiten Bildframe (22) in der Weise aufweist, dass, wenn das von dem Benutzer betätigbare Verknüpfungselement (212) aktiviert wird, und bei Empfang der Auswahl das Rechnersystem (25) dazu konfiguriert ist
eine zweite Anwendung auszuführen, die sich auf den zweiten Bildframe (21) bezieht, wobei die zweite Anwendung das Drucksystem (10, 14) als digitalen Input und zweite Druckerinformation (223) über das Drucksystem (10, 14) als digitalen Output hat, und die zweite Druckerinformation (223) über das Drucksystem (10, 14) an die Benutzerschnittstelle (20) zu übermitteln, wobei die Benutzerschnittstelle (20) dazu konfiguriert ist, bei Empfang der übermittelten ersten Druckerinformation (213) und der übermittelten zweiten Druckerinformation (223)
die erste Druckerinformation (213) in der Nähe des ersten Bildframes (21) auf dem Display (24) anzuzeigen und die zweite Druckerinformation (223) in der Nähe des zweiten Bildframes (22), wobei jede der ersten und zweiten Druckerinformationen eine Art von Information ist über: eine Druckauftragsschlange in dem Drucksystem und/oder einen Druckauftragplan in dem Drucksystem und/oder einen Wartungsplan des Drucksystems und/oder Statusinformation über das Drucksystem und/oder eine Menge von Druckmaterial, das in dem Drucksystem vorhanden ist, und/oder eine Menge an Druckmaterial, die für die Druckaufträge in der Druckauftragsschlange des Drucksystems benötigt wird, und/oder eine Menge an Nachbearbeitungsmaterial, das für die Druckaufträge in der Druckerschlange benötigt wird, und/oder eine bestimmte Periode unbeaufsichtigten Druckens des Drucksystems und/oder Inhaltsinformation über den Druckauftrag, der aktuell von dem Drucksystem gedruckt wird, und/oder eine Übersicht über Verbrauchsmaterial für das Drucksystem und/oder das Medien-Management für das Drucksystem und/oder das Farb-Management für das Drucksystem und/oder das Workflow-Management für das Drucksystem und/oder das Konfigurationsmanagement für das Drucksystem und/oder das Benutzer-Management für das Drucksystem und das Sicherheits-Management für das Drucksystem, und wobei die erste Druckerinformation eine andere Art von Information ist als die zweite Druckerinformation.

2. Das Rechnersystem (25) nach Anspruch 1, bei dem die Benutzerschnittstelle (20) eine dynamische Benutzerschnittstelle ist.

3. Das Rechnersystem (25) nach einem der vorstehenden Ansprüche, bei dem das Auswahlelement (211, 221) eine Aufklappliste ist.

4. Das Rechnersystem (25) nach einem der vorstehenden Ansprüche, bei dem das von dem Benutzer betätigbare Verknüpfungselement (212, 222) Teil des Auswahlelements (211, 221) ist.

5. Das Rechnersystem (25) nach einem der vorstehenden Ansprüche, bei dem das von dem Benutzer betätigbare Verknüpfungselement (212, 222) eine Aufklappliste ist, die mehrere Verknüpfungsnamen enthält, wobei jeder Verknüpfungsname einer Gruppe von verknüpften Bildframes entspricht.

6. Das Rechnersystem (25) nach einem der vorstehenden Ansprüche, bei dem die Benutzerschnittstelle (20) dazu konfiguriert ist, eine Mehrzahl von Bildframes anzuzeigen und jedes Bild aus der Mehrzahl der Bildframes ein Auswahlelement zum Auswählen eines Drucksystems aus einer Mehrzahl von Drucksystemen enthält und ein von einem Benutzer betätigbares Verknüpfungselement zum Verknüpfen des Bildframes mit den anderen Bildframes aus der Mehrzahl der Bildframes enthält.

7. Ein Verfahren zum Überwachen einer Mehrzahl von Drucksystemen mit Hilfe eines Rechnersystems (25), das eine Benutzerschnittstelle (20) mit einem Display (24) aufweist, wobei das Verfahren die folgenden Schritte aufweist:
- anzeigen (S1) eines ersten Bildframes (21) und eines zweiten Bildframes (22) auf der Benutzerschnittstelle (20), wobei jeder Bildframe (21, 22) ein Auswahlelement (211, 221) zum Auswählen eines Drucksystems (10, 14) aus der Mehrzahl der Drucksysteme aufweist und sich auf eine andere Anwendung bezieht, die ausgeführt wird, wenn das Drucksystem (10, 14) mit Hilfe eines entsprechenden Auswahlelements (211, 221) ausgewählt wird,
- empfangen (S2) einer Auswahl eines Drucksystems (10, 14) in dem ersten Bildframe (21) mit Hilfe eines entsprechenden Auswahlelements (211),
- bei Empfang der Auswahl, ausführen (S3) einer ersten Anwendung, die sich auf den ersten Bildframe (21) bezieht, wobei die erste Anwendung das Drucksystem (10, 14) als digitalen Input und erste Druckerinformation (213) über das Drucksystem (10, 14) als digitalen Output hat, und übermitteln (S4) der ersten Druckerinformation (213) über das Drucksystem (10, 14) an die Benutzerschnittstelle (20),
wobei der erste Bildframe (21) ein von einem Benutzer betätigbares Verknüpfungselement (212) zum Verknüpfen des ersten Bildframes (21) mit dem zweiten Bildframe (22) in der Weise enthält, dass, wenn das von dem Benutzer betätigbare Verknüpfungselement (212) aktiviert (S6) wird, und bei Empfang der Auswahl, das Verfahren die folgenden Schritte umfasst:
ausführen (S7) einer zweiten Anwendung, die sich auf den zweiten Bildframe (21) bezieht, wobei die zweite Anwendung das Drucksystem (10, 14) als digitalen Input und zweite Druckerinformation (223) über das Drucksystem (10, 14) als digitalen Output hat, und übermitteln (S8) der zweiten Druckerinformation (223) über das Drucksystem (10, 14) an die Benutzerschnittstelle (20), und
bei Empfang der übermittelten ersten Druckerinformation (213) und der übermittelten zweiten Druckerinformation (223),
anzeigen (S4, S8) der ersten Druckerinformation in der Nähe des ersten Bildframes (21) auf dem Display (24) und der zweiten Druckerinformation (223) in der Nähe des zweiten Bildframes (22), wobei jede der ersten Druckerinformation und der zweiten Druckerinformation eine Art von Information ist über: eine Druckauftragsschlange in dem Drucksystem und/oder einen Druckauftragplan in dem Drucksystem und/oder einen Wartungsplan des Drucksystems und/oder Statusinformation über das Drucksystem und/oder eine Menge von Druckmaterial, das in dem Drucksystem vorhanden ist, und/oder eine Menge an Druckmaterial, die für die Druckaufträge in der Druckauftragsschlange des Drucksystems benötigt wird, und/oder eine Menge an Nachbearbeitungsmaterial, das für die Druckaufträge in der Druckerschlange benötigt wird, und/oder eine bestimmte Periode unbeaufsichtigten Druckens des Drucksystems und/oder Inhaltsinformation über den Druckauftrag, der aktuell von dem Drucksystem gedruckt wird, und/oder eine Übersicht über Verbrauchsmaterial für das Drucksystem und/oder das Medien-Management für das Drucksystem und/oder das Farb-Management für das Drucksystem und/oder das Workflow-Management für das Drucksystem und/oder das Konfigurationsmanagement für das Drucksystem und/oder das Benutzer-Management für das Drucksystem und das Sicherheits-Management für das Drucksystem, und wobei die erste Druckerinformation eine andere Art von Information ist als die zweite Druckerinformation.

8. Nichtflüchtiges, von einem Computer lesbares Medium mit von einem Computer ausführbaren Programmcode der, wenn er ausgeführt wird, einen Computer in die Lage versetzt, die Schritte des Verfahrens nach Anspruch 7 auszuführen.

9. Ein System umfassend ein Rechnersystem nach einem der Ansprüche 1 bis 6 und ein Drucksystem, das dazu konfiguriert ist, von dem Rechnersystem überwacht zu werden.

## Revendications

1. Système informatique (25) pour surveiller une pluralité de systèmes d'impression, le système informatique comprenant une interface utilisateur (20) présentant un écran (24), l'interface utilisateur (20) étant configurée
pour afficher une première trame d'image (21) et une seconde trame d'image (22) sur l'interface utilisateur (20), dans lequel chaque trame d'image (21, 22) comprend un élément de sélection (211, 221) pour sélectionner un système d'impression (10, 14) parmi une pluralité de systèmes d'impression et est associée à une application différente qui est exécutée lorsque le système d'impression (10, 14) est sélectionné au moyen d'un élément de sélection correspondant (211, 221), et
pour recevoir une sélection d'un système d'impression (10, 14) dans la première trame d'image (21) au moyen d'un élément de sélection correspondant (211),
dans lequel le système informatique (25) est configuré, lors de la réception de la sélection, pour exécuter une première application associée à la première trame d'image (21), la première application présentant le système d'impression (10, 14) comme entrée numérique et des premières informations d'imprimante (213) du système d'impression (10, 14) comme sortie numérique et pour transmettre les premières informations d'imprimante (213) du système d'impression (10, 14) à l'interface utilisateur (20),
dans lequel
la première trame d'image (21) comprend un élément de liaison utilisable par un utilisateur (212) pour lier la première trame d'image (21) à la seconde trame d'image (22) de telle manière que,
lorsque l'élément de liaison utilisable par un utilisateur (212) est activé et lors de la réception de la sélection, le système informatique (25) soit configuré
pour exécuter une seconde application associée à la seconde trame d'image (21), la seconde application présentant le système d'impression (10, 14) comme entrée numérique et des secondes informations d'imprimante (223) du système d'impression (10, 14) comme sortie numérique et
pour transmettre les secondes informations d'imprimante (223) du système d'impression (10, 14) à l'interface utilisateur (20), dans lequel l'interface utilisateur (20) est configurée, lors de la réception des premières informations d'imprimante transmises (213) et des secondes informations d'imprimante transmises (223),
pour afficher sur l'écran (24) les premières informations d'imprimante (213) près de la première trame d'image (21) et les secondes informations d'imprimante (223) près de la seconde trame d'image (22), dans lequel chacune des premières informations d'imprimante et des secondes informations d'imprimante est un type d'informations d'au moins une information parmi une file d'attente de tâches d'impression du système d'impression, une planification des tâches d'impression du système d'impression, une planification de maintenance du système d'impression, des informations de statut du système d'impression, une quantité de matériau d'impression résidant dans le système d'impression, une quantité de matériau d'impression nécessaire pour les tâches d'impression dans la file d'attente de tâches d'impression du système d'impression, une quantité de matériau de post-impression nécessaire pour les tâches d'impression dans la file d'attente d'impression, une période déterminée d'impression sans surveillance du système d'impression, des informations de contenu de la tâche d'impression qui est à présent imprimée par le système d'impression, une vue d'ensemble des consommables pour le système d'impression, une gestion des supports pour le système d'impression, une gestion des couleurs pour le système d'impression, une gestion des flux de travaux pour le système d'impression, une gestion de configuration pour le système d'impression, une gestion des utilisateurs pour le système d'impression et une gestion de sécurité pour le système d'impression et dans lequel les premières informations d'imprimante sont d'un type différent d'informations de celui des secondes informations d'imprimante.

2. Système informatique (25) selon la revendication 1, dans lequel l'interface utilisateur (20) est une interface utilisateur dynamique.

3. Système informatique (25) selon l'une quelconque des revendications précédentes, dans lequel l'élément de sélection (211, 221) est une liste déroulante.

4. Système informatique (25) selon l'une quelconque des revendications précédentes, dans lequel l'élément de liaison utilisable par un utilisateur (212, 222) fait partie de l'élément de sélection (211, 221).

5. Système informatique (25) selon l'une quelconque des revendications précédentes, dans lequel l'élément de liaison utilisable par un utilisateur (212, 222) est une liste déroulante comprenant une pluralité de noms de liaison, chaque nom de liaison correspondant à un groupe de trames d'image liées.

6. Système informatique (25) selon l'une quelconque des revendications précédentes, dans lequel l'interface utilisateur (20) est configurée pour afficher une pluralité de trames d'image et chaque image de la pluralité de trames d'image comprend un élément de sélection pour sélectionner un système d'impression parmi une pluralité de systèmes d'impression et comprend un élément de liaison utilisable par un utilisateur pour lier la trame d'image aux autres trames d'image de la pluralité de trames d'image.

7. Procédé pour surveiller une pluralité de systèmes d'impression au moyen d'un système informatique (25) comprenant une interface utilisateur (20) présentant un écran (24), le procédé comprenant les étapes consistant à
- afficher (S1) une première trame d'image (21) et une seconde trame d'image (22) sur l'interface utilisateur (20), dans lequel chaque trame d'image (21, 22) comprend un élément de sélection (211, 221) pour sélectionner un système d'impression (10, 14) parmi une pluralité de systèmes d'impression et est associée à une application différente qui est exécutée lorsque le système d'impression (10, 14) est sélectionné au moyen d'un élément de sélection correspondant (211, 221),
- recevoir (S2) une sélection d'un système d'impression (10, 14) dans la première trame d'image (21) au moyen d'un élément de sélection correspondant (211),
- lors de la réception de la sélection, exécuter (S3) une première application associée à la première trame d'image (21), la première application présentant le système d'impression (10, 14) comme entrée numérique et des premières informations d'imprimante (213) du système d'impression (10, 14) comme sortie numérique et transmettre (S4) les premières informations d'imprimante (213) du système d'impression (10, 14) à l'interface utilisateur (20),
dans lequel la première trame d'image (21) comprend un élément de liaison utilisable par un utilisateur (212) pour lier la première trame d'image (21) à la seconde trame d'image (22) de telle manière que, lorsque l'élément de liaison utilisable par un utilisateur (212) est activé (S6) et lors de la réception de la sélection, et le procédé comprenant les étapes consistant à
exécuter (S7) une seconde application associée à la seconde trame d'image (21), la seconde application présentant le système d'impression (10, 14) comme entrée numérique et des secondes informations d'imprimante (223) du système d'impression (10, 14) comme sortie numérique et
transmettre (S8) les secondes informations d'imprimante (223) du système d'impression (10, 14) à l'interface utilisateur (20), et,
lors de la réception des premières informations d'imprimante transmises (213) et des secondes informations d'imprimante transmises (223),
afficher (S4, S8) sur l'écran (24) les premières informations d'imprimante (213) près de la première trame d'image (21) et les secondes informations d'imprimante (223) près de la seconde trame d'image (22), dans lequel chacune des premières informations d'imprimante et des secondes informations d'imprimante est un type d'informations d'au moins une information parmi une file d'attente de tâches d'impression du système d'impression, une planification de tâches d'impression du système d'impression, une planification de maintenance du système d'impression, des informations de statut du système d'impression, une quantité de matériau d'impression résidant dans le système d'impression, une quantité de matériau d'impression nécessaire pour les tâches d'impression dans la file d'attente de tâches d'impression du système d'impression, une quantité de matériau de post-impression nécessaire pour les tâches d'impression dans la file d'attente d'impression, une période déterminée d'impression sans surveillance du système d'impression, des informations de contenu de la tâche d'impression qui est à présent imprimée par le système d'impression, une vue d'ensemble des consommables pour le système d'impression, une gestion des supports pour le système d'impression, une gestion des couleurs pour le système d'impression, une gestion des flux de travaux pour le système d'impression, une gestion de configuration pour le système d'impression, une gestion des utilisateurs pour le système d'impression et une gestion de sécurité pour le système d'impression, dans lequel les premières informations d'imprimante sont d'un type différent d'informations de celui des secondes informations d'imprimante.

8. Support non transitoire lisible par ordinateur comprenant un code de programme exécutable par ordinateur qui, lorsqu'il est exécuté, permet à un ordinateur d'effectuer les étapes du procédé selon la revendication 7.

9. Système comprenant un système informatique selon l'une quelconque des revendications 1 à 6 et un système d'impression configuré pour être surveillé par le système informatique.
